# EUROPÄISCHE PATENTSCHRIFT

(11) **EP 1 055 679 B1**
(45) Veröffentlichungstag und Bekanntmachung des Hinweises auf die Patenterteilung: **06.08.2003**
(21) Anmeldenummer: 00109477.0
(22) Anmeldetag: 04.05.2000
(51) Int. Cl.: C07F 9/48

(54) **Verfahren zur Herstellung von Alkylphosphonigsäureestern**
Process for the preparation of alkylphosphonous acid esters
Procédé pour la préparation d'esters d'acides alkylphosphoneux

(30) Priorität: 25.05.1999 DE 19923615
(43) Veröffentlichungstag der Anmeldung: 29.11.2000
(73) Patentinhaber: Clariant GmbH, 65929 Frankfurt am Main (DE)
(72) Erfinder: Weferling, Norbert, Dr., 50354 Hürth (DE); Sicken, Martin, Dr., 51149 Köln (DE); Schmitz, Hans-Peter, 50321 Brühl (DE); Kolbe, Günter, 50169 Kerpen (DE)

(56) Entgegenhaltungen:
- EP-A- 0 969 009
- WO-A-99/28326
- US-A- 3 316 293
- US-A- 3 579 576

## Beschreibung

Die vorliegende Erfindung betrifft ein Verfahren zur Herstellung von Alkylphosphonigsäureestern sowie die Verwendung der nach diesem Verfahren hergestellten Produkte.

Alkylphosphonigsäureester stellen wertvolle Synthesebausteine dar, die beispielsweise zur Herstellung von Pflanzenschutzmitteln und Flammschutzmitteln eingesetzt werden können.

Die Herstellung dieser Verbindungen ist technisch aufwendig und erfolgt bisher im Falle der besonders interessanten Ester der Methylphosphonigen Säure aus den entsprechenden Phosphonigsäuredihalogeniden durch Umsetzung mit Alkoholen oder durch Hydrolyse der Phosphonigsäuredihalogenide zu den Phosphonigen Säuren und anschließende Veresterung.

Die beiden Verfahren zugrundeliegenden Phosphonigsäure-dihalogenide, wie etwa das extrem schwierig zu handhabende Methyldichlorphosphin, werden bisher in einer aufwendigen Synthese aus Phosphortrihalogeniden und Alkylhalogeniden in Gegenwart von Aluminiumchlorid hergestellt (Houben-Weyl, Band 12/1, S. 306). Die Reaktion ist stark exotherm und technisch nur schwierig zu beherrschen. Es werden zudem verschiedene Nebenprodukte gebildet, die, wie zum Teil auch die vorgenannten Ausgangsprodukte, giftig, selbstentzündlich und/oder korrosiv, also höchst unerwünscht, sind.

Es besteht daher ein Bedarf an Verfahren zur Herstellung von Alkylphosphonigsäureestern, welches auf einfache Art und Weise durchführbar ist und bei dem einheitliche Produkte in hoher Ausbeute erhalten werden. Auch sollte ein solches Verfahren den bisher bekannten wirtschaftlich und umwelttechnisch deutlich überlegen sein.

Der Erfindung liegt somit die Aufgabe zugrunde, ein Verfahren zur Herstellung von Alkylphosphonigsäureestern zur Verfügung zu stellen, das die vorgenannten Nachteile vermeidet und insbesondere von leicht handhabbaren, technisch zur Verfügung stehenden und gut beherrschbaren Edukten, ausgeht.

Diese Aufgabe wird gelöst durch ein Verfahren der eingangs genannten Art, dadurch gekennzeichnet, daß man
a) elementaren gelben Phosphor mit Alkylierungsmitteln in Gegenwart einer Base zu einem Gemisch, welches als Hauptbestandteile die (Metall)salze der Alkylphosphonigen, Phosphorigen und Hypophosphorigen Säure enthält, umsetzt
b) die Hauptbestandteile des Gemisches aus a) zu einer Estermischung verestert
c) den Ester der Alkylphosphonigen Säure aus der Estermischung isoliert

Das erfindungsgemäße Verfahren weist gegenüber den bisher bekannten Verfahren erhebliche Vorteile auf, da es in der Produktverteilung eine positive Bilanz aufweist und zugleich die aus verschiedenen Gesichtspunkten als negativ zu beurteilenden Phosphonigsäure-dihalogenide als Edukte vermeidet.

Bevorzugt handelt es sich bei den Alkylierungsmitteln um Alkylhalogenide, Dialkylsulfate, Trialkylphosphate, Dialkylcarbonate und/oder um Ameisensäureorthoester.

Besonders bevorzugt werden als Alkylierungsmittel Methylchlorid, Methylbromid und/oder Dimethylsulfat eingesetzt

Bevorzugt handelt es sich bei den Basen um Hydroxide, Carbonate, Bicarbonate, Amide, Alkoholate und/oder Aminbasen.

Bevorzugt wird die Reaktion im Schritt a) in einem Zwei-Phasen-System aus wäßrigem Alkali- oder Erdalkalihydroxid oder Gemischen davon und einem organischen Lösungsmittel durchgeführt.

Bevorzugt werden als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, eingesetzt.

Besonders bevorzugt wird als organisches Lösungsmittel Toluol, allein oder in Kombination mit Alkoholen, eingesetzt.

Gegebenenfalls kann die Reaktion auch in einem nicht-wäßrigem System ausgeführt werden, etwa durch Einsatz von festem Natriumhydroxid oder Aminen.

Bevorzugt wird die Reaktion in Anwesenheit eines Phasen-Transfer-Katalysators durchgeführt.

Bevorzugt handelt es sich bei dem Phasen-Transfer-Katalysator um Tetraalkylphosphoniumhalogenide, Triphenylalkylphosphoniumhalogenide oder Tetraorganylammoniumhalogenide.

Bevorzugt beträgt die Temperatur bei der Reaktion -20 bis +80 °C.

Besonders bevorzugt beträgt die Temperatur 0 bis 30 °C.

Bevorzugt wird die Reaktion unter einem Druck von 0 bis 10 bar durchgeführt.

Bevorzugt wird das erfindungsgemäße Verfahren so ausgeführt, daß man den gelben Phosphor in einem Lösungsmittel oder einem Lösungsmittelgemisch suspendiert oder löst und dann mit Alkylhalogenid und einer Verbindung der Formel MOH oder M'(OH)₂ oder Gemischen davon, in denen M ein Alkalimetall und M' ein Erdalkalimetall bedeutet, umsetzt.

Bevorzugt werden der gelbe Phosphor und das Alkylhalogenid im molaren Verhältnis von 1:1 bis 1:3 miteinander umgesetzt, wobei das molare Verhältnis von gelbem Phosphor zur Verbindung der Formel MOH oder M'(OH)₂ 1:1 bis 1:5 beträgt.

Bevorzugt werden die Hauptbestandteile des Gemisches aus a) im Schritt b) mit einem linearen oder verzweigten Alkohol der algemeinen Formel R-OH, wobei R für einen linearen oder verzweigten Alkylrest mit 1 bis 10 Kohlenstoffatomen steht, verestert.

In einer anderen bevorzugten Ausführungsform des erfindungsgemäßen Verfahrens werden die Hauptbestandteile des Gemisches aus a) mit Mineralsäuren eine Mischung der Alkylphoshphonigen, Phosphorigen und Hypophosphorigen Säuren überführt, wobei man gleichzeitig die (Metall)salze der Mineralsäuren ausfällt und anschließend die Mischung dieser Säuren verestert.

Bevorzugt wird das bei der Veresterung gebildete Wasser durch Azeotropdestillation entfernt.

Mit anderen Worten kann die Veresterung der Phosphonigen Säure zum entsprechenden Monoester durch Umsetzung mit höhersiedenden Alkoholen unter Entfernung des gebildeten Wassers durch Azeotropdestillation erreicht werden.

Bevorzugt wird hierbei die Fällung der Metallsalze, üblicherweise der Alkali- bzw. Erdalkali-Mineralsalze mittels Austausch des Lösungsmittels Wasser durch den in Reaktionsschritt b) zu verwendenden Alkohol durchgeführt.

Bevorzugt wird vor der Veresterung das bereits ausgefällte Alkali- oder Erdalkali-Mineralsalz abfiltriert.

Bevorzugt handelt es sich bei dem Alkohol um n-, i-Butanol, n-Hexanol, Ethylhexanol und/oder Amylalkohol.

Bevorzugt handelt es sich bei den Mineralsäuren um Salzsäure, Schwefelsäure und/oder Phosphorsäure.

Besonders bevorzugt handelt es sich bei den Mineralsäuren um Salzsäure.

Bevorzugt werden die während Schritt a) in geringen Mengen entstandenen Phosphine durch Oxidation entfernt.

Bevorzugt wird Wasserstoffperoxid als Oxidationsmittel verwendet.

Bevorzugt wird im Schritt c) der Ester der Alkylphosphonigen Säure destillativ entfernt. Bevorzugt handelt es sich bei dem Ester der Alkylphosphonigen Säure um Methylphosphonigsäure-n-butylester, Methylphosphonigsäure-iso-butylester Methylphosphonigsäure-n-hexylester, Methylphosphonigsäure-2-ethylhexylester und/oder Methylphosphonigsäure-amylester.

Die Erfindung betrifft auch die Verwendung der nach dem erfindungsgemäßen Verfahren hergestellten Phosphonigsäureester zur Herstellung von phosphororganischen Verbindungen.

Die Erfindung betrifft ebenfalls die Verwendung der nach dem erfindungsgemäßen Verfahren hergestellten Phosphonigsäureester als Vorprodukte zur chemischen Synthese.

Die Erfindung betrifft auch die Verwendung der nach dem erfindungsgemäßen Verfahren hergestellten Phosphonigsäureester zur Herstellung von Phosphinsäuren als Edukte für Pflanzenschutzmittel.

Die Erfindung betrifft auch die Verwendung der nach dem erfindungsgemäßen Verfahren hergestellten Phosphonigsäureester als Ausgangsprodukte zur Herstellung von Flammschutzmitteln für Polymere.

Die Erfindung betrifft auch die Verwendung der nach dem erfindungsgemäßen Verfahren hergestellten Phosphonigsäureester als Ausgangsprodukte zur Herstellung von Flammschutzmitteln für thermoplastische Polymere wie Polyethylenterephthalat, Polybutylenterephthalat oder Polyamid.

Die Erfindung betrifft auch die Verwendung der nach dem erfindungsgemäßen Verfahren hergestellten Phosphonigsäureester als Ausgangsprodukte zur Herstellung von Flammschutzmittel für duroplastische Harze wie ungesättigte Polyesterharze, Epoxidharze, Polyurethane oder Acrylate.

Überraschenderweise wurde gefunden, daß sich elementarer gelber Phosphor nach dem Schritt a) des erfindungsgemäßen Verfahrens mit Alkylierungsmitteln im Zweiphasensystem (organisches Lösungsmittel/Base) und ggf. in Anwesenheit eines (Phasen-Transfer-)Katalysators unter äußerst milden Bedingungen zum (Metall)salz der entsprechenden Alkylphosphonigen Säure RP(:O)HOH umsetzen läßt.

Daneben können geringe Mengen an Dialkylphosphinsäuren, Trialkylphosphanoxid R₃P(:O), Dialkylphosphanoxid und nicht identifizierte Phosphorverbindungen entstehen, die auf übliche Weise aus dem Produktgemisch entfernt werden. Als Nebenprodukt entsteht ferner Wasserstoff, der problemlos aus dem Reaktionsgemisch abgetrennt werden kann. Die vorgenannten Dialkylphosphinsäuren lassen sich aus dem Reaktionsgemisch abtrennen und können andersweitig eingesetzt oder weiterverarbeitet werden.

Überraschenderweise entstehen nach dem erfindungsgemäßen Verfahren weder Phosphin (PH₃) noch Alkylphosphane (RPH₂, R₂PH) in nennenswerten Mengen. Durch Wahl geeigneter Reaktionsbedingungen - wie dem Hinzufügen geringer Anteile von Alkoholen zur organischen. Phase wird die Bildung sämtlicher nicht identifizierter phosphorhaltiger Nebenprodukte zugunsten des Hauptprodukts, den (Metall)salzen der Alkylphosphonige Säure, auf ein überraschend geringes Maß von wenigen Mol% des eingesetzten gelben Phosphors minimiert.

Das erfindungsgemäße Verfahren kann beispielsweise so ausgeführt werden, daß man das Lösungsmittel zusammen mit dem Phasen-Transfer-Katalysator vorlegt und ggf. über den Schmelzpunkt des gelben Phosphors hinaus erwärmt, dann den elementaren (gelben) Phosphor zufügt, das Gemisch unter starkem Rühren auf Temperaturen von beispielsweise -10 bis +30 °C abkühlt und anschließend das Alkylierungsmittel zufügt.

Die Reaktion wird durch Zugabe der Base gestartet. Nach Beendigung der Reaktion kann das Reaktionssystem beispielsweise mit Wasser verdünnt werden und anschließend werden die leichtflüchtigen Anteile (H₂, PH₃, RPH₂, R₂PH und überschüssiges Alkylierungsmittel etc.) entfernt.

Man erhält hiernach ein basenhaltiges/organisches Zwei-Phasen-System, dessen Phasen getrennt werden. Die Inhaltsstoffe aus den Phasen werden analytisch bestimmt.

Die Reaktionspartner können auch in anderer Reihenfolge zusammengegeben werden, beispielsweise dadurch, daß man diese kontinuierlich in dem oben definierten Molverhältnis in einen Reaktor (Druckrohr, Druckreaktor oder Kaskade) einträgt und nach Verweilzeiten von 0,5 bis 2 h aus dem Reaktor wieder ausschleust. Die nach der Phasentrennung erhaltene organische Phase, die noch die Hauptmenge des ggf. eingesetzten Phasen-Transfer-Katalysators enthält, wird zweckmäßigerweise recyclisiert.

Die Isolierung der reinen Alkylphosphonigen Säuren aus dem Gemisch erfolgt in besonders einfacher Weise über die entsprechenden Ester, die im Gegensatz zu den Salzen und Säuren der Alkylphosphonigen Säuren in schonender Weise destillativ aus dem Gemisch isoliert werden können. Alle anderen im Gemisch enthaltenen Verbindungen werden in den Schritten b) und c) des erfindungsgemäßen Verfahrens zwar teilweise auch verestert, bilden aber keine leicht destillierbaren Produkte, so daß die Abtrennung der Alkylphosphonigsäureester in überraschend vollständiger und reiner Form gelingt.

Die Erfindung wird durch die nachstehenden Beispiele erläutert:

### Beispiel 1: Methylphosphonigsäureethylhexylester

### a1) Umsetzung von gelbem Phosphor mit Alkylhalogenid

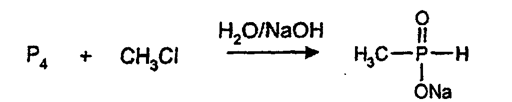

In einem 5·L Edelstahl-Druckreaktor wurde eine Lösung von 26,1 g (0.05 Mol) Tributylhexadecylphosphoniumbromid in 1000 mL Toluol vorgelegt und auf 60°C vorgeheizt. Nach Zugabe von 62 g (2 Mol) gelbem Phosphor wurde unter intensivem Rühren auf -10 °C abgekühlt und dann 202 g (4 Mol) Methylchlorid einkondensiert. Danach wurde innerhalb von 2 Stunden
400 g 50%ige wässrige Natronlauge zudosiert, wobei die Temperatur auf -10 °C gehalten wurde. Innerhalb einer Stunde wurde 400 g Wasser zugegeben, danach eine weitere Stunde nachgerührt, auf Raumtemperatur erwärmt und anschließend der Reaktor über eine Verbrennung entspannt. Man erhielt zwei homogene flüssige Phasen, die getrennt und analysiert wurden.
Die wäßrige Phase (Auswaage: 920 g) enthielt 65,6 Mol% Methylphosphonige Säure, 14,9 Mol% Phosphorige Säure, 13,7 Mol% Hypophosphorige Säure und 2,8 Mol% Dimethylphosphinsäure in Form ihrer Natriumsalze sowie 3 Mol% Dimethyldiphosphin.

### a2) Überführung der Natrium-Salze in die Säuren/NaCl-Abtrennung:

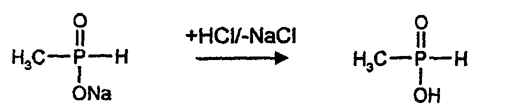

Die Lösung wurde sukzessive mit 60 g 5%iger wäßriger Wasserstoffperoxidlösung (zur Entfernung des Dimethyldiphosphins), mit 240 g 36%iger Salzsäure sowie mit 400 g 2-Ethylhexanol versetzt. Nach Abdestillation des enthaltenen Wassers am Wasserabscheider wurde das ausgefallene Natriumchlorid abfiltriert und mit 100 g 2-Ethylhexanol gewaschen. Die Ethylhexanol-Lösungen enthielten die unter a) genannten Verbindungen jetzt als freie Säuren.

### b) Veresterung von Methanphosphonigsäure im Reaktionsgemisch:

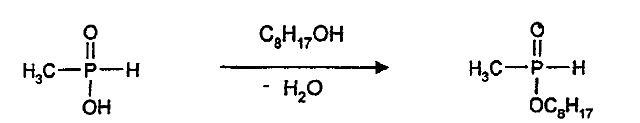

Die Ethylhexanol-Lösungen aus Schritt a2) wurden vereinigt und unter leicht reduziertem Druck ca. 6 h am Wasserabscheider auf ca 120°C erhitzt.

### c) Isolierung des Esters:

Das veresterte Reaktionsgemisch wurde anschließend destillativ vom überschüssigen Ethylhexanol befreit und einer Vakuumdestillation unterzogen. Bei einem Druck von 0.3 mm und einer Kopf-Temperatur von 75°C gingen 220 g Methanphosphonigsäure-2-ethylhexylester über. Das Produkt fällt in Form einer klaren, farblosen Flüssigkeit in einer Reinheit von über 99 % an, entsprechend einer Ausbeute von 58 %, bezogen auf den eingesetzten gelben Phosphor. Analysen: 16.0 % Phosphor (Theorie: 16.2 %); ³¹P-NMR: Dublett bei 34 ppm (Diastereomerenpaar).

### Beispiel 2: Methylphosphonigsäure-n-hexylester

Analog zum Verfahren im Schritt a1) von Beispiel 1 erhielt man 910 g einer wäßrigen Phase, die 67,4 Mol% Methylphosphonige Säure, 14,6 Mol% Phosphorige Säure, 8,7 Mol% Hypophosphorige Säure und 3,8 Mol% Dimethylphosphinsäure in Form ihrer Natriumsalze sowie 4 Mol% Dimethyldiphosphin enthielt. Die Lösung wurde sukzessive mit 60 g 5%iger wäßriger Wasserstoffperoxidlösung, mit 240 g 36%iger Salzsäure sowie mit 300 g n-Hexanol versetzt. Nach Abdestillation des enthaltenen Wassers am Wasserabscheider wurde das ausgefallene Natriumchlorid abfiltriert und mit 100 g n-Hexanol gewaschen. Die Hexanol-Lösungen wurden vereinigt und unter leicht reduziertem Druck ca. 8 h am Wasserabscheider auf ca 140 °C erhitzt. Das veresterte Reaktionsgemisch wurde anschließend destillativ vom überschüssigen Hexanol befreit und einer Vakuumdestillation unterzogen. Bei einem Druck von 0.3 mm und einer Kopf-Temperatur von 62 °C gingen 199 g Methanphosphonigsäure-nhexylester über.

Das Produkt fällt in Form einer klaren, farblosen Flüssigkeit in einer Reinheit von über 99% an, entsprechend einer Ausbeute von 61 %, bezogen auf den eingesetzten gelben Phosphor. Analysen: 18.5 % Phosphor (Theorie: 18.9 %); ³¹P-NMR: Singulett bei 34 ppm.

### Beispiel 3: Methylphosphonigsäure-i-butylester

In einem 5 L Edelstahl-Druckreaktor wurde eine Lösung von 26,1 g (0.05 Mol) Tributylhexadecylphosphoniumbromid in 1000 mL Toluol vorgelegt und auf 60 °C vorgeheizt. Nach Zugabe von 62 g (2 Mol) gelbem Phosphor wurde unter intensivem Rühren auf 5 °C abgekühlt und dann 202 g (4 Mol) Methylchlorid einkondensiert. Danach wurde auf ca. 20 °C erwärmt und bei dieser Temperatur innerhalb 2 Stunden 500 g 40%ige wässrige Natronlauge zudosiert. Innerhalb einer Stunde wurden 300 g Wasser zugegeben, danach zwei weitere Stunden nachgerührt und anschließend der Reaktor über eine Verbrennung entspannt. Man erhielt zwei homogene flüssige Phasen, die getrennt und analysiert wurden.

Die wäßrige Phase (Auswaage: 920 g) enthielt 64,6 Mol% Methylphosphonige Säure, 14,4 Mol% Phosphorige Säure, 12,7 Mol% Hypophosphorige Säure und 3,3 Mol% Dimethylphosphinsäure in Form ihrer Natriumsalze sowie 5 Mol% Dimethyldiphosphin. Die Lösung wurde sukzessive mit 60 g 5%iger wäßriger Wasserstoffperoxidlösung, mit 240 g 36%iger Salzsäure sowie mit 300 g iso-Butanol versetzt Nach Abdestillation des enthaltenen Wassers am Wasserabscheider wurde das ausgefallene Natriumchlorid abfiltriert und mit 100 g i-Butanol gewaschen. Die Butanol-Lösungen wurden vereinigt und ca. 12 h am Wasserabscheider auf 115 bis 125 °C erhitzt. Das veresterte Reaktionsgemisch wurde anschließend destillativ vom überschüssigen Butanol befreit und einer Vakuumdestillation unterzogen. Bei einem Druck von 0.5 mm und einer Kopf-Temperatur von 42 °C gingen 158 g Methanphosphonigsäure-i-butylester über.

Das Produkt fällt in Form einer klaren, farblosen Flüssigkeit in einer Reinheit von über 99 % an, entsprechend einer Ausbeute von 58 %, bezogen auf den eingesetzten gelben Phosphor. Analysen: 22.6 % Phosphor (Theorie: 22.8 %); ³¹P-NMR: Singulett bei 34 ppm.

### Beispiel 4: Methylphosphonigsäure-n-butylester

Analog zu Beispiel 3 wurde die Umsetzung von gelbem Phosphor mit Methylchlorid/40%ige NaOH durchgeführt. Die Aufarbeitung erfolgte mit n-Butanol.

Die vereinigten Butanol-Lösungen wurden ca. 14 h am Wasserabscheider auf 115 bis 125 °C erhitzt. Das veresterte Reaktionsgemisch wurde anschließend destillativ vom überschüssigen Butanol befreit und einer Vakuumdestillation unterzogen. Bei einem Druck von 0.5 mm und einer Kopf-Temperatur von 42 °C gingen 153 g Methanphosphonigsäure-n-butylester über.

Das Produkt fällt in Form einer klaren, farblosen Flüssigkeit in einer Reinheit von über 99 % an, entsprechend einer Ausbeute von 56 %, bezogen auf den eingesetzten gelben Phosphor. Analysen: 22.4 % Phosphor (Theorie: 22.8 %); ³¹P-NMR: Singulett bei 34 ppm.

## Patentansprüche

1. Verfahren zur Herstellung von Alkylphosphonigsäureestern, **dadurch gekennzeichnet, daß** man
a) elementaren gelben Phosphor mit Alkylierungsmitteln in Gegenwart einer Base zu einem Gemisch, welches als Hauptbestandteile die (Metall)salze der Alkylphosphonigen, Phosphorigen und Hypophosphorigen Säure enthält, umsetzt
b) die Hauptbestandteile des Gemisches aus a) zu einer Estermischung verestert
c) den Ester der Alkylphosphonigen Säure aus der Estermischung isoliert

2. Verfahren nach Anspruch 1, **dadurch gekennzeichnet, daß** es sich bei den Alkylierungsmitteln um Alkylhalogenide, Dialkylsulfate, Trialkylphosphate, Dialkylcarbonate und/oder um Ameisensäureorthoester handelt.

3. Verfahren nach Anspruch 1 oder 2, **dadurch gekennzeichnet, daß** als Alkylierungsmittel Methylchlorid, Methylbromid und/oder Dimethylsulfat eingesetzt werden.

4. Verfahren nach einem oder mehreren der Ansprüche 1 bis 3, **dadurch gekennzeichnet, daß** es sich bei den Basen um Hydroxide, Carbonate, Bicarbonate, Amide, Alkoholate und/oder Aminbasen handelt.

5. Verfahren nach einem oder mehreren der Ansprüche 1 bis 3, **dadurch gekennzeichnet, daß** die Reaktion im Schritt a) in einem Zwei-Phasen-System aus wäßrigem Alkali- oder Erdalkalihydroxid oder Gemischen davon und einem organischen Lösungsmittel durchgeführt wird.

6. Verfahren nach einem oder mehreren der Ansprüche 1 bis 5, **dadurch gekennzeichnet, daß** als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, eingesetzt werden.

7. Verfahren nach einem oder mehreren der Ansprüche 1 bis 6, **dadurch gekennzeichnet, daß** als organisches Lösungsmittel Toluol, allein oder in Kombination mit Alkoholen, eingesetzt wird.

8. Verfahren nach einem oder mehreren der Ansprüche 1 bis 7, **dadurch gekennzeichnet, daß** die Reaktion in Anwesenheit eines Phasen-Transfer-Katalysators durchgeführt wird.

9. Verfahren nach Anspruch 8, **dadurch gekennzeichnet, daß** es sich bei dem Phasen-Transfer-Katalysator um Tetraalkylphosphoniumhalogenide, Triphenylalkylphosphoniumhalogenide oder Tetraorganylammoniumhalogenide handelt.

10. Verfahren nach einem oder mehreren der Ansprüche 1 bis 9, **dadurch gekennzeichnet, daß** die Temperatur bei der Umsetzung mit dem gelben Phosphor -20 bis + 80 °C beträgt.

11. Verfahren nach einem oder mehreren der Ansprüche 1 bis 10, **dadurch gekennzeichnet, daß** die Temperatur bei der Umsetzung mit dem gelben Phosphor 0 bis 30 °C beträgt.

12. Verfahren nach einem oder mehreren der Ansprüche 1 bis 11, **dadurch gekennzeichnet, daß** die Reaktion unter einem Druck von 0 bis 10 bar durchgeführt wird.

13. Verfahren nach einem oder mehreren der Ansprüche 1 bis 12, **dadurch gekennzeichnet, daß** man die Hauptbestandteile des Gemisches aus a) im Schritt b) mit einem linearen oder verzweigten Alkohol der algemeinen Formel R-OH , wobei R für einen linearen oder verzweigten Alkylrest mit 1 bis 10 Kohlenstoffatomen steht, verestert.

14. Verfahren nach einem oder mehreren der Ansprüche 1 bis 12, **dadurch gekennzeichnet, daß** die Hauptbestandteile des Gemisches aus a) mit Mineralsäuren zu einer Mischung der Alkylphosphonigen, Phosphorigen und Hypophosphorigen Säuren umsetzt und gleichzeitig die (Metall)salze der Mineralsäuren ausfällt und anschließend die Mischung dieser Säuren verestert.

15. Verfahren nach einem oder mehreren der Ansprüche 1 bis 14, **dadurch gekennzeichnet, daß** man das bei der Versterung gebildete Wasser durch Azeotropdestillation entfernt.

16. Verfahren nach einem oder mehreren der Ansprüche 1 bis 15, **dadurch gekennzeichnet, daß** es sich bei dem Alkohol um n-, i-Butanol, n-Hexanol, Ethylhexanol und/oder Amylalkohol handelt.

17. Verfahren nach einem oder mehreren der Ansprüche 1 bis 16, **dadurch gekennzeichnet, daß** es sich bei den Mineralsäuren um Salzsäure, Schwefelsäure und/oder Phosphorsäure handelt.

18. Verfahren nach einem oder mehreren der Ansprüche 1 bis 17, **dadurch gekennzeichnet, daß** es sich bei den Mineralsäuren um Salzsäure handelt.

19. Verfahren nach einem oder mehreren der Ansprüche 1 bis 18, **dadurch gekennzeichnet, daß** die im Schritt a) in geringen Mengen entstandenen Phosphine durch Oxidation entfernt werden.

20. Verfahren nach einem oder mehreren der Ansprüche 1 bis 19, **dadurch gekennzeichnet, daß** Wasserstoffperoxid für die Oxidation eingesetzt wird.

21. Verfahren nach einem oder mehreren der Ansprüche 1 bis 20, **dadurch gekennzeichnet, daß** im Schritt c) der Ester der Alkylphosphonigen Säure destillativ entfernt wird.

22. Verfahren nach einem oder mehreren der Ansprüche 1 bis 21, **dadurch gekennzeichnet, daß** es sich bei dem Ester der Alkylphosphonigen Säure um Methylphosphonigsäure-n-butylester, Methylphosphonigsäure-iso-butylester Methylphosphonigsäure-n-hexylester, Methylphosphonigsäure-2-ethylhexylester und/oder Methylphosphonigsäure-amylester handelt.

## Claims

1. A process for the preparation of alkylphosphonous acid esters, which comprises
a) reacting elemental yellow phosphorus with alkylating agents in the presence of a base to give a mixture which comprises, as principal constituents, the (metal) salts of alkylphosphonous, phosphorous and hypophosphorous acids,
b) esterifying the principal constituents of the mixture from a) to give an ester mixture,
c) isolating the ester of the alkylphosphonous acid from the ester mixture.

2. A process as claimed in claim 1, wherein the alkylating agents are alkyl halides, dialkyl sulfates, trialkyl phosphates, dialkyl carbonates and/or formic acid ortho-esters.

3. A process as claimed in claim 1 or 2, wherein the alkylating agent employed is methyl chloride, methyl bromide and/or dimethyl sulfate.

4. A process as claimed in one or more of claims 1 to 3, wherein the bases are hydroxides, carbonates, bicarbonates, amides, alkoxides and/or amine bases.

5. A process as claimed in one or more of claims 1 to 3, wherein the reaction in step a) is carried out in a two-phase system comprising aqueous alkali or alkaline-earth metal hydroxide or mixtures thereof and an organic solvent.

6. A process as claimed in one or more of claims 1 to 5, wherein the organic solvents employed are straight-chain or branched alkanes, alkylsubstituted aromatic solvents, water-immiscible or only partially water-miscible alcohols or ethers, alone or in combination with one another.

7. A process as claimed in one or more of claims 1 to 6, wherein the organic solvent employed is toluene, alone or in combination with alcohols.

8. A process as claimed in one or more of claims 1 to 7, wherein the reaction is carried out in the presence of a phase-transfer catalyst.

9. A process as claimed in claim 8, wherein the phase-transfer catalyst is a tetraalkylphosphonium halide, triphenylalkylphosphonium halide or tetraorganylammonium halide.

10. A process as claimed in one or more of claims 1 to 9, wherein the temperature during the reaction with the yellow phosphorus is from -20 to +80°C.

11. A process as claimed in one or more of claims 1 to 10, wherein the temperature during the reaction with the yellow phosphorus is from 0 to 30°C.

12. A process as claimed in one or more of claims 1 to 11, wherein the reaction is carried out under a pressure of from 0 to 10 bar.

13. A process as claimed in one or more of claims 1 to 12, wherein the principal constituents of the mixture from a) are esterified in step b) using a linear or branched alcohol of the general formula R-OH, where R is a linear or branched alkyl radical having 1 to 10 carbon atoms.

14. A process as claimed in one or more of claims 1 to 12, wherein the principal constituents of the mixture from a) are reacted with mineral acids to give a mixture of alkylphosphonous, phosphorous and hypophosphorous acids and at the same time the (metal) salts of the mineral acids are precipitated, and the mixture of these acids is subsequently esterified.

15. A process as claimed in one or more of claims 1 to 14, wherein the water formed during the esterification is removed by azeotropic distillation.

16. A process as claimed in one or more of claims 1 to 15, wherein the alcohol is n- or i-butanol, n-hexanol, ethylhexanol and/or amyl alcohol.

17. A process as claimed in one or more of claims 1 to 16, wherein the mineral acid is hydrochloric acid, sulfuric acid and/or phosphoric acid.

18. A process as claimed in one or more of claims 1 to 17, wherein the mineral acid is hydrochloric acid.

19. A process as claimed in one or more of claims 1 to 18, wherein the phosphines formed in small amounts in step a) are removed by oxidation.

20. A process as claimed in one or more of claims 1 to 19, wherein hydrogen peroxide is employed for the oxidation.

21. A process as claimed in one or more of claims 1 to 20, wherein the ester of the alkylphosphonous acid is removed by distillation in step c).

22. A process as claimed in one or more of claims 1 to 21, wherein the ester of the alkylphosphonous acid is n-butyl methylphosphonite, isobutyl methylphosphonite, n-hexyl methylphosphonite, 2-ethylhexyl methylphosphonite and/or amyl methylphosphonite.

## Revendications

1. Procédé pour la préparation d'ester de l'acide alkylphosphoneux, **caractérisé en ce que**
a) on fait réagir du phosphore jaune élémentaire sur des agents d'alkylation en présence d'une base pour obtenir un mélange qui est constitué par les sels(métalliques) de l'acide alkylphosphoneux, de l'acide phosphoreux et de l'acide hypophosphoreux en tant que constituants principaux,
b) on estérifie les constituants principaux du mélange de a) pour obtenir un mélange d'esters,
c) on isole l'ester de l'acide alkylphosphoneux à partir du mélange d'esters.

2. Procédé selon la revendication 1, **caractérisé en ce qu'**il s'agit pour les agents d'alkylation d'halogénures d'alkyles, de sulfates de dialkyles, de phosphates de trialkyles, de carbonates de dialkyles et/ou d'orthoesters de l'acide formique.

3. Procédé selon la revendication 1 ou 2, **caractérisé en ce que** l'agent d'alkylation est le chlorure de méthyle, le bromure de méthyle et/ou le sulfate de diméthyle.

4. Procédé selon une ou plusieurs des revendications 1 à 3, **caractérisé en ce qu'**il s'agit pour les bases d'hydroxydes, de carbonates, de bicarbonates, d'amides, d'alcoolates et/ou de bases aminées.

5. Procédé selon une ou plusieurs des revendications 1 à 3, **caractérisé en ce que** la réaction à l'étape a) est mise en oeuvre dans un système aqueux biphasique constitué par un hydroxyde alcalin ou alcalino-terreux aqueux ou leurs mélanges et un solvant organique.

6. Procédé selon une ou plusieurs des revendications 1 à 5, **caractérisé en ce qu'**on utilise en tant que solvant organique des alcanes linéaires ou ramifiés, des solvants aromatiques substitués par des substituants alkyles, des alcools ou éthers non miscibles à l'eau ou partiellement miscibles à l'eau, seuls ou en combinaison entre eaux.

7. Procédé selon une ou plusieurs des revendications 1 à 6, **caractérisé en ce qu'**on utilise en tant que solvant organique le toluène, seul ou en mélange avec des alcools.

8. Procédé selon une ou plusieurs des revendications 1 à 7, **caractérisé en ce que** la réaction est mise en oeuvre en présence d'un catalyseur de transfert de phase.

9. Procédé selon la revendication 8, **caractérisé en ce que** qu'il s'agit pour le catalyseur de transfert de phase d'halogénures de tétraalkylphosphonium, d'halogénures de triphénylalkylphosphonium ou d'halogénures de tétraorganylammonium.

10. Procédé selon une ou plusieurs des revendications 1 à 9, **caractérisé en ce que** la température dans la réaction avec le phosphore jaune va de -20 à +80°C.

11. Procédé selon une ou plusieurs des revendications 1 à 10, **caractérisé en ce que** la température dans la réaction avec le phosphore jaune va de 0 à 30°C.

12. Procédé selon une ou plusieurs des revendications 1 à 11, **caractérisé en ce que** la réaction est mise en oeuvre sous une pression de 0 à 10 bars.

13. Procédé selon une ou plusieurs des revendications 1 à 12, **caractérisé en ce qu'**on estérifie les constituants principaux du mélange de l'étape a) à l'étape b) par un alcool linéaire ou ramifié de formule générale R-OH, R représentant un reste alkyle présentant 1 à 10 atomes de carbone.

14. Procédé selon une ou plusieurs des revendications 1 à 12, **caractérisé en ce qu'**on faut réagir les constituants principaux du mélange de a) avec des acides minéraux pour obtenir un mélange d'acide alkylphosphoneux, d'acide phosphoreux et d'acide hypophosphoreux et en même temps, on précipite les sels(métalliques) des acides minéraux et ensuite on estérifie le mélange.

15. Procédé selon une ou plusieurs des revendications 1 à 14, **caractérisé en ce qu'**on élimine par distillation azéotropique l'eau formée au cours de l'estérification.

16. Procédé selon une ou plusieurs des revendications 1 à 15, **caractérisé en ce qu'**il s'agit pour les alcools de n-, d'i-butanol, de n-hexanol, d'éthylhexanol et/ou d'alcools amylique.

17. Procédé selon une ou plusieurs des revendications 1 à 16, **caractérisé en ce que** pour les acides minéraux il s'agit de l'acide chlorhydrique, de 'lacide sulfurique et/ou de l'acide phosphorique.

18. Procédé selon une ou plusieurs des revendications 1 à 17, **caractérisé en ce qu'**il s'agit pour les acides minéraux de l'acide chlorhydrique.

19. Procédé selon une ou plusieurs des revendications 1 à 18, **caractérisé en ce qu'**on élimine par oxydation les phosphines formées en faibles quantités à l'étape a).

20. Procédé selon une ou plusieurs des revendications 1 à 19, **caractérisé en ce qu'**on utilise le peroxyde d'hydrogène pour l'oxydation.

21. Procédé selon une ou plusieurs des revendications 1 à 20, **caractérisé en ce qu'**on élimine à l'étape c) par distillation l'ester de l'acide alkylphosphoneux.

22. Procédé selon une ou plusieurs des revendications 1 à 21, **caractérisé en ce qu'**il s'agit pour les esters de l'acide alkylphosphoneux de l'ester n-butylique de l'acide méthylphosphonique, de l'ester iso-butylique de l'acide méthylphosphoneux, de l'ester n-hexylique de l'acide méthylphosphoneux, de l'ester n-éthylhexylique et/ou amylique de l'acide méthylphosphoneux.
